Europäisches Patentamt

European Patent Office

Office européen des brevets

(19)

(11) **EP 1 395 009 A2**

(12) **EUROPÄISCHE PATENTANMELDUNG**

(43) Veröffentlichungstag:
**03.03.2004  Patentblatt 2004/10**

(51) Int Cl.7: **H04L 25/06**

(21) Anmeldenummer: **03101918.5**

(22) Anmeldetag: **27.06.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **02.09.2002  DE 10240444**

(71) Anmelder: **SIEMENS AKTIENGESELLSCHAFT**
**80333 München (DE)**

(72) Erfinder:
• **Marke, Matthias**
**82194, Gröbenzell (DE)**
• **Xu, Wen**
**82008, Unterhaching (DE)**

(54) **Bitweises Berechnen der Wahrscheinlichkeit einer richtigen Übertragung**

(57)     Eine einfache und effiziente Möglichkeit zum Berechnen eines Zuverlässigkeitsmaß für einzelne Bits eines Symbols wird durch das Verfahren und der Vorrichtung zum Berechnen der Wahrscheinlichkeit einer richtigen Übertragung von Bits eines Symbols mit mehr als einem Bit über einen Übertragungskanal in einem Detektor (1) eines Kommunikationsempfängers, dadurch gekennzeichnet, dass für jedes einzelne demodulierte Bit eines Symbols jeweils ein die Wahrscheinlichkeit einer richtigen Übertragung über den Übertragungskanal repräsentierendes Zuverlässigkeitsmaß aus den ausgegebenen Korrelationswerten des Detektors (1) berechnet wird.

1

Detektor (z. B. Demodulator)

Empfangs -
einheit

Berechnungs-
und Steuereinheit

Sendeeinheit

2

3

4

EP 1 395 009 A2

**Beschreibung**

Die Erfindung betrifft ein Verfahren und eine Vorrichtung zum Berechnen der Wahrscheinlichkeit einer richtigen Übertragung von Bits eines Symbols mit mehr als einem Bit über einen Übertragungskanal in einem Demodulator oder Detektor eines Kommunikationsempfängers.

DE 19726600 A2 beschreibt ein Verfahren zum Bearbeiten von mit einem Empfänger empfangenen Daten, bei dem in aufeinanderfolgenden Rahmen über eine Übertragungsstrecke übertragene Daten empfangen werden. Ein Rahmen enthält eine vorgegebene Anzahl von Bitstellen. Die empfangenen Daten werden mit Hilfe eines Metrikinkremente verwendenden Maximum-Aposteriori-Wahrscheinlichkeitsalgorithmus oder Maximum-Likelihood-Algorithmus bearbeitet, wobei der Viterbi-Algorithmus verwendet wird. Die Metrikinkremente für mindestens eine Bitstelle, deren Wert und/oder deren sogenannter Zuverlässigkeitswert von Rahmen zu Rahmen korreliert, werden dabei abhängig von einem für diese Bitstelle ermittelten aktuellen Zuverlässigkeitswert berechnet. Der Zuverlässigkeitswert ist ein Maß für die Wahrscheinlichkeit, dass der Wert der Bitstelle einen vorgegebenen Wert hat. Ein derartiges Verfahren ist für einen Viterbi-Algorithmus z.B. aus dem Aufsatz "Source-Controlled Channel Decoding" von Joachim Hagenauer in "IEEE Transactions on Communications", Band 43, Nr. 9, September 1995, Seite 2449 bis Seite 2457, bekannt. Wesentliche Teile dieses Aufsatzes sind auch in der Patentschrift DE 42 24 214 C2 enthalten. Insbesondere die Formel des Aufsatzes gibt die Berechnung neuer Metri ken $M_k^{(m)}$ aus alten Metriken $M_{k-1}^{(m)}$ und einem zugehörigen Metrikinkrement an. Dabei bezeichnet m einen bestimmten Pfad und k eine bestimmte Bitstelle in einem Rahmen. Beim Berechnen der Metrik $M_k^{(m)}$ wird ein Zuverlässigkeitswert $L(u_k)$ verwendet. Auf den Seiten 2454 und 2455 des genannten Aufsatzes wird zur Bestimmung des Zuverlässigkeitswertes $L(u_k)$ der sogenannte HUK-Algorithmus vorgeschlagen, der auf einem empirischen Modell beruht, bei dem die Zuverlässigkeitswerte $L(u_k)$ ähnlich den sogenannten Punkten bei einer deutschen Haftpflichtversicherung für Autos berechnet werden. Aufgrund des empirischen Charakters sind die Schätzungen für die Zuverlässigkeitswerte $L(u_k)$ ungenau. Die Metrikinkremente werden entweder zu bereits berechneten Metriken addiert oder multipliziert.

Der Maximum-Aposteriori-Wahrscheinlichkeitsalgorithmus und der Maximum-Likelihood-Algorithmus sind Algorithmen, die eine über die Übertragungsstrecke übertragene Datenfolge mit Referenzfolgen s vergleichen, und die Referenzfolge s bestimmen, die mit der größten Wahrscheinlichkeit zu der gesendeten Datenfolge gehört. Maximum-Aposteriori-Wahrscheinlichkeit bedeutet, dass die Referenzfolge s gewählt wird, für die die Wahrscheinlichkeit P (s|y) maximal wird, wobei y die empfangene Datenfolge ist. Maximum-Likelihood bedeutet, dass die Referenzfolge s gewählt wird, für die die Wahrscheinlichkeit P (y|s) maximal wird. Die Übertragungsstrecke ist z.B. ein Funkkanal, eine Übertragungsleitung oder auch ein Speichermedium, von dem Daten gelesen werden.

Aus der europäischen Patenanmeldung EP 0 449 327 A2 ist ein rauschunempfindlicher Mehrfach-Empfänger mit mehreren Empfangsantennen bekannt. Die Empfangssignale werden durch ein einziges Sendesignal erzeugt, das über verschiedene Übertra gungswege zu den Antennen gelangt. Aus den Empfangssignalen der einzelnen Antennen werden Zweigmetriken für die Durchführung eines Viterbi-Algorithmus berechnet. Vor der Durchführung des Algorithmus werden die zu den Empfangssignalen der einzelnen Antennen berechneten Zweigmetriken gewichtet und verknüpft. Dies führt dazu, dass nach der Durchführung Viterbi-Algorithmus eine Symbolfolge erzeugt wird, die mit einer dem Sendesignal zugrundeliegenden Sende-Symbolfolge gut übereinstimmt.

Ein digitales Kommunikationssystem hat zum Übertragen von Daten eine Kanalkodierung und Modulation in einem Sender, und empfangsseitig eine Demodulation und Kanaldekodierung in einem Empfänger. Die digitale Modulation ist ein Prozess, die ein digitales Symbol (z. B. von der Kanalkodierung) für eine geeignete Übertragung mit einen Signal anpasst. Die M-ary Modulation kann ein Symbol mit $\lfloor \log_2 M \rfloor$ bits in eine M Wellenform (z. B. sinusförmiger Träger, Rechteck Puls, etc.) abbilden, das verschiedene Eigenschaften (Amplitude, Position, Frequenz, Pulsweite, etc.) hat. $\lfloor x \rfloor$ bezeichnet dabei den Integer = Vorkomma Teil von x. Entsprechend zu diesen Eigenschaften existieren eine Reihe von Modulationsschemen, wie z. B. das amplitude shift keying (ASK), frequency shift keying (FSK), phase shift keying (PSK), etc.. Die Modulation M=2 wird als binäre Modulation bezeichnet. M>2 werden als höhere Modulationsstufen bezeichnet, in welchen ein moduliertes Symbol aus $\lfloor \log_2 M \rfloor >1$ Bits besteht. Demodulation (oder allgemein Detektion) ist der umgekehrte Prozess der Modulation zum Entdecken der digitalen Symbole in den empfangenen Wellenformen, die üblicherweise durch Noise und Kanalbeeinträchtigungen fehlerhaft sind. Hier wird Demodulation als Sonderfall von Detektion betrachtet. Um Übertragungsfehler zu minimieren werden Näherungen sowohl bei dem kohärenten oder dem nicht-kohärenten Demodulator verwen det, wie der Korrelation, angepasste Filter (Matched-Filter), Bandpassfilter, Umschlag-Detektion, etc.. Desweiteren wird ein Zuverlässigkeitsmaß des Demodulators oder Detektors, welches die Fehlergüte der demodulierten/detektierten Bits wiedergibt, herangezogen. Dieses Zuverlässigkeitsmaß ist essentiell für das Verbessern der Leistung der darauffolgenden Kanal-Dekodierung und für die Leistung des gesamten Kommunikationssystems [Hagenauer 92]. Gerade bei CTM - Geräten ist diese Art der Ermittlung der Fehlergüte wichtig und wird in 3GPP [3GPP TS 26.226] beschrieben. Das Zuverlässigkeitsmaß eines Demodulators oder Detektors ist üblicherweise bestimmt für Symbole entsprechend von Wellenformen bzw. einen Korrelator. Bei der 2-ary Modulation besteht jedes Symbol nur aus einem Bit, daher ist das Zuverlässigkeitsmaß eines Bits gleich dem eines Symbols. Bei höheren Modulationsstufen hat ein Symbol mehr als ein Bit, z. B. sind es zwei Bits pro Symbol bei der 4-FSK Modulation, die in CTM Geräten benutzt wird. Die bisherige Lösung sieht vor, dass das Zuverlässigkeitsmaß für beide Bits gleich ist. Es wird für die 4-FSK Modulation berechnet durch das Subtrahieren des arithmetischen Mittels der drei Kreuzkorrelationen (X-Korrelation) der nicht gewählten Frequenzen von der Kreuzkorrelation der gewählten Frequenz:

Zuverlässigkeitsmaß = X-Korrelation(detektierte Frequenzen) - 1/3 * Summe (X-Korrelationen (nicht detektierte Frequenzen))

Die harten Werte der zwei Bits des Symbols werden durch das Abbilden des Symbols (= detektierte Frequenz) in die Bits bestimmt.

In der Tondemodulation sind folgende Schritte für den Erhalt von zwei Bit mit einem Zuverlässigkeitsmaß von einem 5 ms Unterrahmen aufgeführt.

- Empfangene Samples werden in einen Puffer kopiert, damit sie unabhängig von weiteren empfangenen Samples sind.
- Für alle möglichen Phasen-offsets wird die X-Korrelation (Kreuzkorrelation) zwischen dem erhaltenen Signal und den vier möglichen Sende-Signalen (Sinus von 400, 600, 8000 oder 1000Hz) berechnet.
- Die X-Korrelationen sind Tiefpass-gefiltert, damit der Phasen offset mit der maximalen Korrelation gefunden wird.
- Der offset mit der maximalen Korrelation ist Tiefpass-(IIR)-gefiltert (Das Maximum der früheren Rahmen und der augenblickliche Wert werden gewichted und hinzugefügt.
- Die Frequenz, die die maximale Korrelation für das empfangenen Signal mit dem IIR-gefilterten maximum Phasen offset hat, wird ermittelt.
- Das Zuverlässigkeitsmaß wird berechnet aus der Subtraktion des arithmetischen Mittels aus drei X-Korrelationen der nicht gewählten Frequenzen und der X-Korrelation der gewählten Frequenz: Zuverlässigkeitsmaß = X-Korrelation (detektierte Frequenz) - 1/3 * Summe (X-Korrelationen (nicht detektierte Frequenzen)).
- Die harten Werte für die beiden Bits eines Symbols werden durch das Abbilden des Symbols (= detektierte Frequenz) in die Bits bestimmt.
- Eine Abtastkorrektur wird berechnet, die aussagt, ob die maximale Korrelation war vor oder nach der Mitte des 5 ms Unterrahmen war und die darauffolgenden Samples sollten 39 oder 41 Samples statt 40 haben, wenn dies erforderlich ist.

Das Zuverlässigkeitsmaß von einzelnen Bits eines Symbols muss nicht gleich sein, was bedeutet, dass die bisherig vorgeschlagene Lösung nur sub-optimal ist.

Es ist Aufgabe der Erfindung, zum Ermitteln der Zuverlässigkeitswerte ein einfaches Verfahren anzugeben, das die aktuellen Zuverlässigkeitswerte bei der Übertragung von Bits eines Symbols mit mehr als einem Bit mit größtmöglicher Wahrscheinlichkeit zutreffend berechnet.

Die Aufgabe wird erfindungsgemäß durch die Gegenstände der unabhängigen Patentansprüche bezüglich des Verfahrens und der Vorrichtung gelöst. Kern der Erfindung ist, dass für jedes einzelne Bit eines mehr als ein Bit umfassendes Symbols eine Wahrscheinlichkeit einer richtigen Übertragung über einen Übertragungskanal aus den ausgegebenen Korrelationswerten eines Demodulators oder Detektors berechnet wird. Insbesondere bei höheren Modulationsstufen stellt die Erfindung eine einfache und effiziente Möglichkeit dar, ein eine Wahrscheinlichkeit repräsentierendes Zuverlässigkeitsmaß zu berechnen. Das Verfahren ist optimal für den AWGN (Additives weißes Gaußsches Rauschen) Kanal und den BSC (Binären Symmetrischen Kanal) Kanal, kann jedoch auch für andere Kanäle genutzt werden. Dazu muss der Demodulator nicht verändert werden. Vorteilhafte Ausführungsformen sind in den auf diesen Anspruch rückbezogenen Unteransprüchen angegeben. Die Berechnung eines Zuverlässigkeitsmaßes bei der Übertragung von Text-Symbolen von und zu einem CTM-Gerät verbessert die Leistung entscheidend.

Die Erfindung wird anhand eines in der Figur dargestellten Ausführungsbeispiels näher erläutert. Dabei zeigt

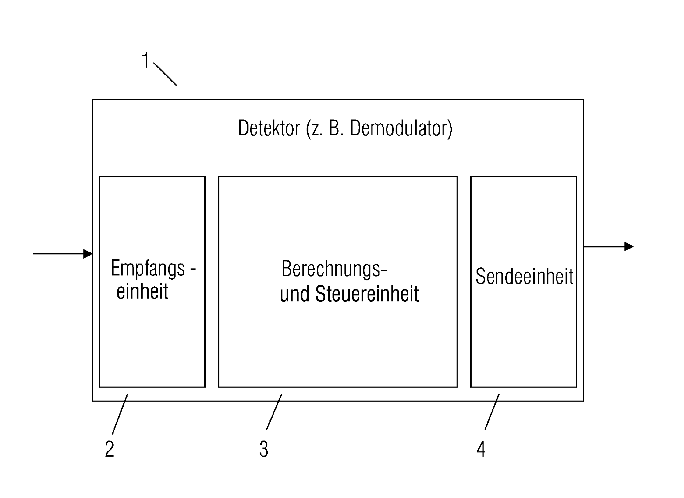

Figur 1      eine vereinfachte Darstellung für das Berechnen des Zuverlässigkeitsmaßes eines Bits in einem Demodulator oder Detektor.

Figur 1 zeigt, wie von einem Übertragungskanal Bits eines Symbols von einer Empfangseinheit (2) in einem Demodulator (1) eines CTM-Empfängers empfangen werden und zu einer Berechnungs- und Steuereinheit (3) weitergeleitet werden. In dieser Berechnungs- und Steuereinheit (3) wird für jedes einzelne Bit eines Symbols ein Zuverlässigkeitsmaß wie folgt abhängig vom Übertragungskanal berechnet:

Berechnung des Zuverlässigkeitsmaßes:

<u>Notation:</u>

Gesendete Signal Sequenz: $\vec{x}^{(m)} = (x_0^{(m)}, x_1^{(m)}, ..., x_{L-1}^{(m)})$,
wobei $m \in \{0, 1, ..., M\text{-}1\}$ der Index der möglichen gesendeten Signalsequenzen ist; $L$ die Anzahl der Daten-Samples.
Ausgegebene Sequenz $\vec{x}^{(m)}$: $\vec{s}^{(m)} = (s_0, s_1, ..., s_{K-1})$,
wobei $\vec{s}^{(m)}$ der binäre Repräsentant von $m$ ist mit $K$ Bits (z. B. $s_i^{(m)} \in \{+1, -1\}$, $2^K \geq M$) und diese haben eine eins-zu-eins Relation zu $\vec{x}^{(m)}$.
Empfangene Sequenz: $\vec{y} = (y_0, y_1, ..., y_{L-1})$
Ein Maximum *a posteriori* Wahrscheinlichkeits-(MAP)-Detektor maximiert die *a posteriori* Wahrscheinlichkeit $P(\vec{x}^{(m)}|\vec{y})$, z. B.

$$\max_m P(\vec{x}^{(m)} \mid \vec{y})$$

Ein Maximum-Likelihood (ML) Detektor maximiert die Likelihood Funktion $P(\vec{y}| \vec{x}^{(m)})$, z. B.

$$\max_m P(\vec{y} \mid \vec{x}^{(m)})$$

Ein MAP Detektor und ein ML Detektor kann untereinander in Beziehung gebracht werden zu

$$P(\vec{x}^{(m)}|\vec{y}) = \frac{P(\vec{x}^{(m)} \cap \vec{y})}{P(\vec{y})} = \frac{P(\vec{y}|\vec{x}^{(m)})P(\vec{x}^{(m)})}{P(\vec{y})}$$

Im Fall, dass keine *a priori* Information $P(\vec{x}^{(m)})$ erhältlich ist, sind beide Detektoren gleich

$$P(\vec{x}^{(m)}|\vec{y}) = \alpha P(\vec{y}|\vec{x}^{(m)})$$

Sei $\vec{s} = (s_0, s_1, ..., s_{K-1})$ die ausgegebene Sequenz entsprechend zur detektierten Sequenz $\vec{x}^{(m)}$. Daraufhin wird das Zuverlässigkeitsmaß von $s_i$, wie folgt definiert:

$$L(s_i) = \log \frac{P(s_i = +1|\vec{y})}{P(s_i = -1|\vec{y})}$$

Für den AWGN Kanal gilt:

$$P(\vec{y} \mid \vec{x}^{(m)}) = \prod_i \frac{1}{\sqrt{2\pi}\,\sigma} \exp\left(-\frac{(y_i - x_i^{(m)})^2}{2\sigma^2}\right)$$

$$= \frac{1}{\sqrt{2\pi}\,\sigma} \exp\left(-\frac{1}{2\sigma^2} \sum_i (y_i - x_i^{(m)})\right)^2$$

$$= \frac{1}{\sqrt{2\pi}\,\sigma} \exp\left(-\frac{1}{2\sigma^2} \sum_i (y_i^2 - 2y_i x_i^{(m)} + x_i^{(m)^2})\right)$$

wobei σ die Standardabweichung von $y_i$ ist und approximiert werden kann durch

$$\bar{y} \approx \frac{1}{L}\sum_i y_i$$

$$\sigma \approx \sqrt{\frac{1}{L}\sum_i (y_i - \bar{y})^2}$$

Vorausgesetzt, dass $\vec{x}^{(m)}$ und $\vec{y}$ normiert auf ihre Energien sind, wie

$$\frac{1}{2\sigma^2}\sum_i (y_i^{2} + x_i^{(m)2}) = \beta = const$$

definieren wir

$$\rho^{(m)} \overset{\Delta}{=} corr(\vec{y}, \vec{x}^{(m)}) = \sum_i y_i x_i^{(m)}$$

d.h. $\rho^{(m)}$ ist die Ausgabe eines Korrelationsempfängers oder eines angepassten Filters, dann ist

$$P(\vec{y}|\vec{x}^{(m)}) = \frac{1}{\sqrt{2\pi}\sigma}\, \exp(\rho^{(m)}/\sigma^2 - \beta)$$

Während die eins-zu-eins Relation zwischen $\vec{x}^{(m)}$ und $\vec{s}^{(m)}$ ist, ergibt sich:

$$P(\vec{s}^{(m)}|\vec{y}) = P(\vec{x}^{(m)}|\vec{y}) = \alpha P(\vec{y}|\vec{x}^{(m)})$$

da

$$P(s_i = +1|\vec{y}) = \sum_{m, where\ s_i = +1} P(\vec{s}^{(m)}|\vec{y})$$

$$P(s_i = -1|\vec{y}) = \sum_{m, where\ s_i = -1} P(\vec{s}^{(m)}|\vec{y})$$

das Zuverlässigkeitsmaß für die MAP oder ML Detektion errechnet sich demnach zu

$$L(s_i) = \log\frac{P(s_i = +1|\vec{y})}{P(s_i = -1|\vec{y})}$$

$$L(s_i) = \log \frac{\sum\limits_{m, where\, s_i=+1} \exp(\rho^{(m)}/\sigma^2)}{\sum\limits_{m, where\, s_i=-1} \exp(\rho^{(m)}/\sigma^2)}$$

als sinnvolle Approximation ergibt sich:

$$L(s_i) \approx \log \frac{\max\limits_{m, where\, s_i=+1} \exp(\rho^{(m)}/\sigma^2)}{\max\limits_{m, where\, s_i=-1} \exp(\rho^{(m)}/\sigma^2)} = \max\limits_{m, where\, s_i=+1} \rho^{(m)}/\sigma^2 - \max\limits_{m, where\, s_i=-1} \rho^{(m)}/\sigma^2 \stackrel{\Delta}{=} \widetilde{L}(s_i)$$

Es ist anzumerken, dass die Konstante σ in den obigen Formeln gegebenenfalls von $\vec{x}^{(m)}$ oder m abhängen kann. In diesen Fällen wird σ als eine von m abhängige Konstante $\sigma^{(m)}$ betrachtet und obige Gleichungen gelten auch für diesen Fall.

Jetzt zeigt $M^+$ die Anzahl der Indizies m, wobei $s_i = +1$, und $M$ die Anzahl der Indizies, wobei $s_i = -1$. Die oben genannte Approximation gilt als gut, da

$$L(s_i) \geq \log \frac{\sum\limits_{m, where\, s_i=+1} \exp(\rho^{(m)}/\sigma^2)}{M^- \max\limits_{m, where\, s_i=-1} \exp(\rho^{(m)}/\sigma^2)} \geq \log \frac{\max\limits_{m, where\, s_i=+1} \exp(\rho^{(m)}/\sigma^2)}{M^- \max\limits_{m, where\, s_i=-1} \exp(\rho^{(m)}/\sigma^2)}$$

$$L(s_i) \leq \log \frac{M^+ \max\limits_{m, where\, s_i=+1} \exp(\rho^{(m)}/\sigma^2)}{\sum\limits_{m, where\, s_i=-1} \exp(\rho^{(m)}/\sigma^2)} \leq \log \frac{M^+ \max\limits_{m, where\, s_i=+1} \exp(\rho^{(m)}/\sigma^2)}{\max\limits_{m, where\, s_i=-1} \exp(\rho^{(m)}/\sigma^2)}$$

$L(s_i)$ ist daher nach oben und unten begrenzt durch

$$\widetilde{L}(s_i) - \log M^- \leq L(s_i) \leq \widetilde{L}(s_i) + \log M^+$$

Bei CTM Geräten wird ein Paar von zwei Bits $s^{(m)} = (b_1, b_0)$ moduliert unter Verwendung einer 4-ary FSK Modulation in einer von vier Sinuswellenformen der Länge 5 ms (z. B. $L$ = 40 samples) $\vec{x}^{(m)} = (x_0^{(m)}, x_1^{(m)}, ..., x_{L-1}^{(m)})$, m = 0,1,2,3. Einzelnes Abbilden zwischen zwei Paaren und der Sinus Frequenz ist definiert durch

$$s^{(0)} = (-1,-1)$$

$$s^{(1)} = (-1,+1)$$

$$s^{(2)} = (+1,-1)$$

$$s^{(3)} = (+1,+1)$$

mit einem Bit $b_0$ oder $b_1$, "+1" repräsentiert eine logische 1, "-1" repräsentiert eine logische 0.

Unter Berücksichtigung der aller Ergebnisse ergibt sich

$$L(b_0) = \log \frac{\sum_{m=1,3} \exp(\rho^{(m)}/\sigma^2)}{\sum_{m=0,2} \exp(\rho^{(m)}/\sigma^2)} \approx \max(\rho^{(1)}, \rho^{(3)})/\sigma^2 - \max(\rho^{(0)}, \rho^{(2)})/\sigma^2$$

$$L(b_1) = \log \frac{\sum_{m=2,3} \exp(\rho^{(m)}/\sigma^2)}{\sum_{m=0,1} \exp(\rho^{(m)}/\sigma^2)} \approx \max(\rho^{(2)}, \rho^{(3)})/\sigma^2 - \max(\rho^{(0)}, \rho^{(1)})/\sigma^2$$

Diese Approximation wird für die Implementierung verwendet. In der Praxis kann $\sigma^2$ gewählt werden, damit die größtmögliche Leistung erreicht wird.

Die mathematischen Beschreibung für die bisherige Lösung lautet:

$$L(b_0) = k_0 \cdot s_0(\rho^{(0)}, \rho^{(1)}, \rho^{(2)}, \rho^{(3)}) \left| \max(\rho^{(0)}, \rho^{(1)}, \rho^{(2)}, \rho^{(3)}) - \frac{1}{3}(\sum_{i=0,1,2,3} \rho^{(i)} - \max(\rho^{(0)}, \rho^{(1)}, \rho^{(2)}, \rho^{(3)})) \right|$$

$$L(b_1) = k_0 \cdot s_1(\rho^{(0)}, \rho^{(1)}, \rho^{(2)}, \rho^{(3)}) \left| \max(\rho^{(0)}, \rho^{(1)}, \rho^{(2)}, \rho^{(3)}) - \frac{1}{3}(\sum_{i=0,1,2,3} \rho^{(i)} - \max(\rho^{(0)}, \rho^{(1)}, \rho^{(2)}, \rho^{(3)})) \right|$$

mit

$$s_0(\rho^{(0)}, \rho^{(1)}, \rho^{(2)}, \rho^{(3)}) = \begin{cases} -1, & wenn \max(\rho^{(0)}, \rho^{(1)}, \rho^{(2)}, \rho^{(3)}) = \rho^{(0)} \\ +1, & wenn \max(\rho^{(0)}, \rho^{(1)}, \rho^{(2)}, \rho^{(3)}) = \rho^{(1)} \\ -1, & wenn \max(\rho^{(0)}, \rho^{(1)}, \rho^{(2)}, \rho^{(3)}) = \rho^{(2)} \\ +1, & wenn \max(\rho^{(0)}, \rho^{(1)}, \rho^{(2)}, \rho^{(3)}) = \rho^{(3)} \end{cases}$$

und

$$s_1(\rho^{(0)}, \rho^{(1)}, \rho^{(2)}, \rho^{(3)}) = \begin{cases} -1, & wenn \max(\rho^{(0)}, \rho^{(1)}, \rho^{(2)}, \rho^{(3)}) = \rho^{(0)} \\ -1, & wenn \max(\rho^{(0)}, \rho^{(1)}, \rho^{(2)}, \rho^{(3)}) = \rho^{(1)} \\ +1, & wenn \max(\rho^{(0)}, \rho^{(1)}, \rho^{(2)}, \rho^{(3)}) = \rho^{(2)} \\ +1, & wenn \max(\rho^{(0)}, \rho^{(1)}, \rho^{(2)}, \rho^{(3)}) = \rho^{(3)} \end{cases} \quad .$$

Für jedes ausgehende Bit, resultieren zwei Frequenzen in den gleichen harten Wert für dieses Bit. Das Zuverlässigkeitsmaß wird aus dem Unterschied der maximalen Metrik der Frequenzen, die aus dem ausgehenden Bit mit hartem Wert 0 resultieren und der maximalen Metrik für Frequenzen, die aus dem ausgehenden Bit mit hartem Wert 1 resultieren.

Die Abbildung der Zeichen für das Zuverlässigkeitsmaß lautet:

$$HardBit = \begin{cases} 0 & \text{wenn (Soft Value} < 0) \\ 1 & \text{wenn (Soft Value} > 0) \end{cases}$$

Die C Implementierung kann wie folgt aussehen:

```
/*
First Out Bit :
Positive soft value for Frequencies 2 (800Hz) and 3 (1000Hz)
→ Search for max. metric
*/
if (Metric2>=Metric3)
    max_plus=Metric2;
else
    max_plus=Metric3;
/*
Negative soft value for Frequencies 0 (400Hz) and 1 (600Hz)
-> Search for max. metric
*/
if(Metric0>=Metric1)
    max_minus=Metric0;
else
    max_minus=Metric1;
/* Calculate difference */
bits_out[0]=(max_plus-max_minus);
/*
Second Out Bit :
Positive soft value for Frequencies 1(600Hz) and 3 (1000Hz)
→ Search for max. metric
*/
if (Metric1>=Metric3)
    max_plus=Metric1;
else
    max_plus=Metric3;
/*
Negative soft value for Frequencies 0 (400Hz) and 2 (800Hz)
-> Search for max. metric
*/
if(Metric0>=Metric2)
    max_minus=Metric0;
```

```
else

    max_minus=Metric2;

/* Calculate difference */

bits_out[1]=(max_plus-max_minus);
```

Das Zuverlässigkeitsmaß jedes einzelnen Bits eines Symbols und die demodulierten Bits werden von der Berechnungs- und Steuereinheit (3) an eine Sendeeinheit (4) weitergeleitet, die sie an weitere Module des Empfängers sendet.

Ein weiteres Anwendungsbeispiel ist die, u. U. die regelmäßige, Synchronisierung der Phase eines Signals, die sich im Laufe der Übertragung verschieben kann. Das Zuverlässigkeitsmaß wird mehrere Male mit dem oben beschriebenen Verfahren bestimmt (= je eine Messung), wobei verschiedene mögliche Phasenverschiebungen die Messungen unterscheiden. Bei der Messung mit der maximal ermittelten Zuverlässigkeit im Sinne eines hohen Betrages des Zuverlässigkeitsmaßes wird die gesuchte Phasenverschiebung, die dem Signal zuzeigen ist, angenommen. Aus der Phasenverschiebung kann ein Korrekturwert im Zeitbereich für die Synchronisierung berechnet werden.

**Patentansprüche**

1.  Verfahren zum Berechnen der Wahrscheinlichkeit einer richtigen Übertragung von Bits eines Symbols mit mehr als einem Bit über einen Übertragungskanal in einem Detektor (1) eines Kommunikationsempfängers,
    **dadurch gekennzeichnet,**
    **dass** für jedes einzelne detektierte Bit eines Symbols jeweils ein die Wahrscheinlichkeit einer richtigen Übertragung über den Übertragungskanal repräsentierendes Zuverlässigkeitsmaß aus den ausgegebenen Korrelationswerten des Detektors (1) berechnet wird.

2.  Verfahren nach Anspruch 1,
    **dadurch gekennzeichnet,**
    **dass** der Detektor (1) ein Demodulator in einem Kommunikatonsempfänger ist

3.  Verfahren nach einem der vorhergehenden Ansprüche,
    **dadurch gekennzeichnet,**
    **dass** das Zuverlässigkeitsmaß eines einzelnen Bits nach folgender Formel

$$L(s_i) = \log \frac{\displaystyle\sum_{m,\,where\,s_i=+1} \exp(\rho^{(m)}/\sigma^2)}{\displaystyle\sum_{m,\,where\,s_i=-1} \exp(\rho^{(m)}/\sigma^2)}$$

    berechnet wird, wobei $L(s_i)$ das Zuverlässigkeitsmaß, $\rho^{(m)}$ der Korrelationswert zwischen dem empfangenen und dem m-ten gesendeten Signal und $\sigma$ die Standardabweichung ist.

4.  Verfahren nach einem der vorhergehenden Ansprüche,
    **dadurch gekennzeichnet,**
    **dass** das Zuverlässigkeitsmaß eines einzelnen Bits nach der Formel

$$L(s_i) \approx \max_{m,\,where\,s_i=+1} \rho^{(m)}/\sigma^2 - \max_{m,\,where\,s_i=-1} \rho^{(m)}/\sigma^2$$

    berechnet wird, wobei $L(s_i)$ das Zuverlässigkeitsmaß, $\rho^{(m)}$ der Korrelationswert zwischen dem empfangenen und dem m-ten gesendeten Signal und $\sigma$ die Standardabweichung ist.

**5.** Verfahren nach einem der vorhergehenden Ansprüche,
**dadurch gekennzeichnet,**
**dass** der Übertragungskanal ein additives-weißes-Gaußsches-Rauschen-Kanal ist.

**6.** Verfahren nach einem der vorhergehenden Ansprüche,
**dadurch gekennzeichnet,**
**dass** der Übertragungskanal ein symmetrischer Binärkanal ist.

**7.** Verfahren nach einem der vorhergehenden Ansprüche,
**dadurch gekennzeichnet,**
**dass** der CTM-Empfänger ein Kommunikationsempfänger ist.

**8.** Verfahren nach einem der vorhergehenden Ansprüche,
**dadurch gekennzeichnet,**
**dass** das Kommunikationsnetz ein mobiles zellulares Kommunikationsnetz ist.

**9.** Verfahren nach einem der vorhergehenden Ansprüche,
**dadurch gekennzeichnet,**
**dass** die Kreuzkorrelation der schnellen Fourier Transformations-Werte als Metrik für die Berechnung des Zuverlässigkeitsmaßes verwendet wird.

**10.** Verfahren nach einem der vorhergehenden Ansprüche,
**dadurch gekennzeichnet,**
**dass** für die Berechnung der Qualität des Übertragungskanals repräsentierende Zuverlässigkeitsmaßes mit der a posteriori Wahrscheinlichkeit aus den Korrelationswerten des Detektors (1) geschieht.

**11.** Verfahren nach einem der vorhergehenden Ansprüche,
**dadurch gekennzeichnet,**
**dass** für die Berechnung der Qualität des Übertragungskanals repräsentierenden Zuverlässigkeitsmaßes mit der Log-Likelihood-Funktion aus den Korrelationswerten des Detektors (1) geschieht.

**12.** Vorrichtung zum Berechnen der Wahrscheinlichkeit einer richtigen Übertragung von Bits eines Symbols mit mehr als einem Bit für einen Übertragungskanal in einem Detektor (1) eines Kommunikationsempfängers,
mit einer Empfangseinheit (2) zum Empfangen von einzelnen Bits eines Symbols,
mit einer Berechnungs- und Steuereinheit (3) zum Berechnen eines die Übertragungsqualität des des Übertragungskanals repräsentierenden Zuverlässigkeitsmaßes aus den ausgegebenen Korrelationswerten des Detektors (1) und zum Beifügen dieses Zuverlässigkeitsmaßes an die empfangenen Bits und
mit einer Sendeeinheit (4) zum Weiterleiten der empfangenen Bits in einem Kommunikationsendgerät-Empfänger.

1

Detektor (z. B. Demodulator)

| Empfangs -einheit | Berechnungs- und Steuereinheit | Sendeeinheit |

2                3                4